# EUROPÄISCHE PATENTSCHRIFT

(11) **EP 1 869 359 B1**
(45) Veröffentlichungstag und Bekanntmachung des Hinweises auf die Patenterteilung: **11.05.2011**
(21) Anmeldenummer: 06723367.6
(22) Anmeldetag: 11.03.2006
(51) Int. Cl.: F16N 7/38, F16N 13/14

(54) **EINLEITUNGSSCHMIEREINRICHTUNG**
FEEDING LUBRICATING DEVICE
DISPOSITIF DE LUBRIFICATION D'INTRODUCTION

(30) Priorität: 12.04.2005 DE 202005005916 U
(43) Veröffentlichungstag der Anmeldung: 26.12.2007
(73) Patentinhaber: Lincoln GmbH, 69190 Walldorf (DE)
(72) Erfinder: PALUNCIC, Zdravko, 67067 Ludwigshafen (DE); SCHÖNFELD, Andreas, 68789 St.Leon-Rot (DE)
(74) Vertreter: KEIL & SCHAAFHAUSEN Patentanwälte
(86) Internationale Anmeldenummer: PCT/EP2006/002255
(87) Internationale Veröffentlichungsnummer: WO 2006/108478

(56) Entgegenhaltungen:
- EP-A- 0 473 385
- EP-A- 1 052 445
- GB-A- 2 044 411

## Beschreibung

Die Erfindung bezieht sich auf eine Einleitungsschmiereinrichtung mit einem Schmierstoffvorrat und einer von einem Antriebsmotor antreibbaren Schmierstoffpumpe mit wenigstens einem Pumpenelement zur Förderung von Schmierstoff über eine Schmierstoffleitung zu wenigstens einer Schmierstelle, insbesondere wenigstens einem Einleitungsverteiler, sowie mit einem Antriebsorgan, wie einer Antriebswelle, und ggf. mit einen Exzenter aufweisenden Mitteln zu Erzeugung wenigstens eines Pumpenhubes des wenigstens einen Pumpenelements.

Bei derartigen Einleitungsschmiereinrichtungen stellt sich die Aufgabe, auf möglichst einfache Weise nach einer Druckphase, in welcher Schmierstoff der wenigstens einen Schmierstelle zugeführt wird, eine Entlastungsphase einzuleiten, in welcher überschüssiger Schmierstoff dem Schmierstoffvorrat zurückgeführt wird.

Aus der Offenlegungsschrift EP 0 473 385 A1 ist eine Einleitungsschmiereinrichtung mit einem von einer Antriebswelle mittels eines an einem Exzenter angeordneten Betätigungsstifts betätigbaren Kugelventil zum Öffnen bzw. Verschließen einer Schmierstoff-Rückflussleitung bekannt. Dabei kann ein Verriegelungselement in einer ersten, die Kugel des Kugelventils mit einer Federkraft belastenden Stellung und einer zweiten, die Kugel entlastenden Stellung verriegelt werden.

Aufgabe der Erfindung ist es, eine Entlastungseinrichtung mit einem geringeren konstruktiven Aufwand anzugeben, welche der eingangs genannten Forderung auf möglichst zuverlässige Weise entspricht.

Die erfindungsgemäße Lösung besteht z.B. im Wesentlichen darin, dass bei einer Einleitungsschmiereinrichtung der eingangs genannten Art eine Druckentlastungseinrichtung vorgesehen ist, welche ebenfalls über das Antriebsorgan für das wenigstens eine Pumpenelement betätigbar ist und in einer Druckphase eine Rückflussleitung zwischen der Schmierstoffleitung und dem Schmierstoffvorrat sperrt sowie in einer anschließenden Entlastungsphase freigibt, wobei die Druckentlastungseinheit einen von dem Betätigungselement betätigbaren Kipphebelmechanismus aufweist.

Auf diese Weise wird die Druckentlastung nach der Versorgung der wenigstens einen Schmierstelle mit Schmierstoff auf einfache Weise unter weitgehender Nutzung der bereits vorhandenen Einrichtungsteile erreicht.

In Weiterbildung des Erfindungsgedankens kann die Druckentlastungseinheit von einem auf dem Antriebsorgan, wie der Antriebswelle, sitzenden Nockenscheibe oder dergleichen Betätigungselement betätigbar sein.

Bevorzugt liegt dabei die Druckentlastungseinheit über ein Rad oder dergleichen Übertragungselement an einer Nockenfläche des Betätigungselements an.

Das Öffnen und Schließen der Verbindung zwischen Schmierstoffleitung und Schmierstoffvorrat zur Rückführung von Schmierstoff kann z.B. dadurch auf konstruktiv einfache Weise gelöst werden, dass die Druckentlastungseinheit einen axial verschiebbaren Steuerkolben aufweist, welcher in der Druckphase die Rückflussleitung zwischen der Schmierstoffleitung und dem Schmierstoffvorrat sperrt und in der anschließenden Entlastungsphase, z.B. aufgrund einer auf der Umfangsfläche des Steuerkolbens umlaufenden Nut, freigibt.

Die Druckentlastungsphase kann bei der vorgeschlagenen Einleitungsschmiereinrichtung auf einfache Weise durch Umkehren der Bewegungsrichtung des Antriebsorgans mit dem Betätigungselement eingeleitet werden.

Eine kompakte Bauart der Einleitungsschmiereinrichtung erhält man insbesondere dann, wenn das wenigstens eine Pumpenelement und die Druckentlastungseinheit in einem gemeinsamen Pumpgehäuse untergebracht sind.

Dabei kann der Antriebsmotor, ggf. mit dem zugehörigen Getriebe z. B. am Boden des Pumpengehäuses befestigt sein.

Wenn mehrere Pumpenelemente vorgesehen sind, wird mit der Erfindung unabhängig von der Druckentlastungseinheit ferner vorgeschlagen, dass diese miteinander, ggf. über, an oder in dem Boden des Pumpengehäuses vorgesehene Schmierstoffkanäle, in Strömungsverbindung stehen.

Weitere Ziele, Merkmale, Vorteile und Anwendungsmöglichkeiten der Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Figur 1: ein Prinzipschema einer die Erfindung aufweisenden Einleitungs- schmiereinrichtung,
- Figur 2: schematisch in Schrägansicht von oben, geöffnet und teilweise weggebrochen, eine Schmierstoffpumpe, welche bei der Verwirkli- chung der Erfindung Einsatz finden kann,
- Figur 3: die Schmierstoffpumpe gemäß Figur 2, von unten gesehen und
- Figur 4: schematisch ein Ausführungsbeispiel einer bei der Schmierstoff- pumpe gemäß Figur 2 und 3 mit Kipphebelmechanismus ausgebil- deten Druckentlastungseinheit.

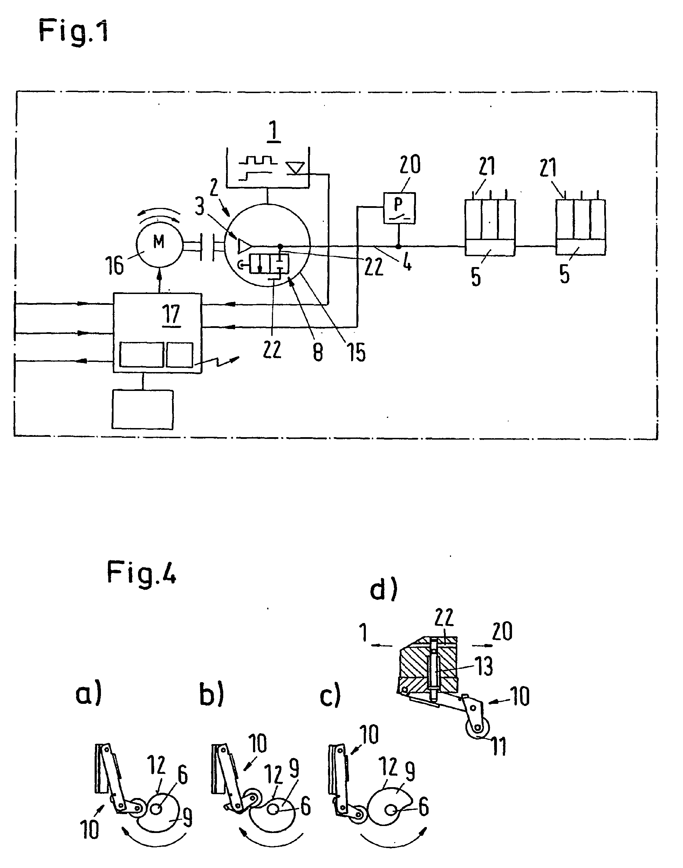

Gemäß Figur 1 weist die erfindungsgemäße Einleitungsschmiereinrichtung eine Schmierstoffpumpe 2 auf, deren Pumpenelemente 3 von einem elektrischen Antriebsmotor 16 betätigt werden, um Schmierstoff von einem Schmierstoffvorrat 1 in eine Schmierstoffleitung 4 zu fördern. Die Schmierstoffleitung 4 führt zu (im dargestellten Falle) zwei Einleitungsverteilern 5, von welchen entsprechende Versorgungsleitungen 21 zu den einzelnen Schmierstellen abzweigen. In der Schmierstoffleitung 4 ist ein Druckschalter 20 vorgesehen, welcher beim Erreichen eines vorgesehenen maximalen Pumpendruckes die weitere Schmierstoffförderung durch Abgabe eines entsprechenden Signals vermittels einer Steuerung 17 an den Antriebsmotor 16 abschaltet. Über die Steuerung 17 wird auch der Schmierstoffpegel in dem Schmierstoffvorrat 1 überwacht.

In Figur 1 ist auch angedeutet, dass in dem Pumpengehäuse 15 außer dem einen oder den mehreren Pumpenelementen 3 auch eine Druckentlastungseinheit vorgesehen ist. Die Druckentlastungseinheit 8 ist in eine Rückflussleitung 22 eingeschaltet, welche die Schmierstoffleitung 4 zwischen Pumpenelement 3 und Druckschalter 20 mit dem Schmierstoffvorrat 1 verbindet. Die Druckentlastungseinheit 8 schließt in der Druckphase, bei welcher die Schmierstellen mit Schmierstoff versorgt werden sollen, die Rückflussleitung 22 öffnet sie jedoch in einer anschließenden Entlastungsphase.

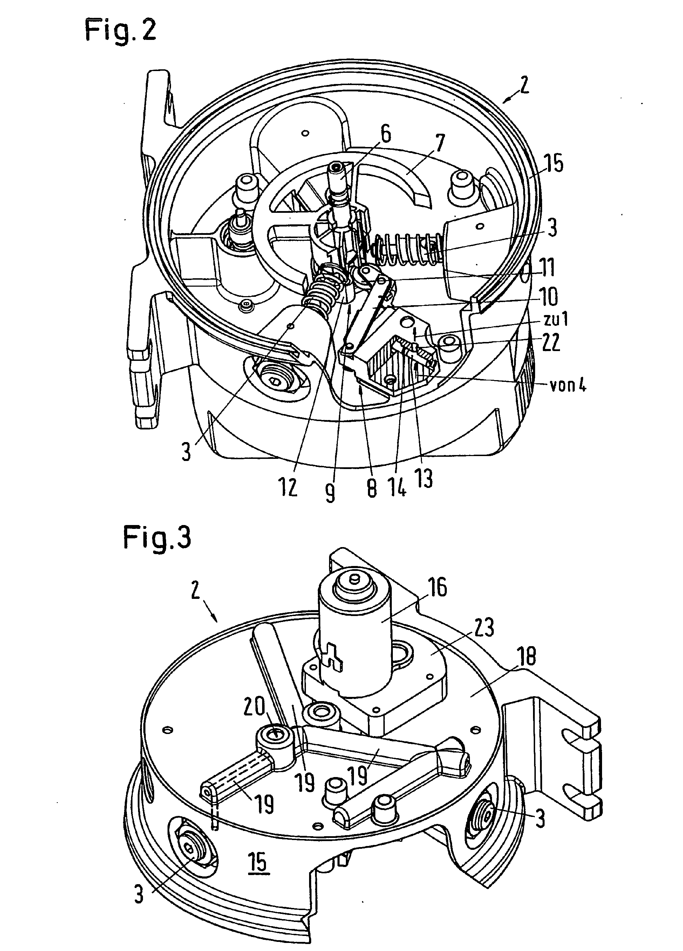

Figur 2 veranschaulicht einen beispielhaften Aufbau einer erfindungsgemäßen Schmierstoffpumpe 2 mit einer solchen Druckentlastungseinheit 8. Man erkennt, dass die (im dargestellten Fall) drei Pumpenelemente 3 von dem Motor 16 über ein als Antriebswelle ausgebildetes Antriebsorgan 6 und einen sich mit dem Antriebsorgan 6 drehenden radartigen Exzenter 7 (welcher teilweise weggebrochen dargestellt ist) in zeitlichen Abständen betätigt werden, um Schmierstoff in die Schmierstoffleitung 4 zu fördern. Ein solches Pumpenelement 3 hat z.B. einen Förderkolben, welcher gegen die Wirkung einer Rückstellfeder durch Beaufschlagung des Exzenters 7 einen Hub ausführen kann, um eine bestimmte Schmierstoffmenge aus einer Schmierstoffkammer in Richtung der Schmierstoffleitung 4 abzugeben.

Auf dem Antriebsorgan 6 sitzt erfindungsgemäß ein als Nockenscheibe ausgebildetes Betätigungselement 9, welche mit ihrer Nockenfläche 12 über ein als Rad ausgebildetes Übertragungselement 11 auf einen Kipphebelmechanismus 10 einwirkt. Der Kipphebelmechanismus 10 arbeitet seinerseits mit einem Steuerkolben 13 zusammen, welcher in der Druckphase die Rückflussleitung 22 zwischen der wenigstens einen Schmierstelle, insbesondere dem Druckschalter 20, und dem Schmierstoffvorrat 1 sperrt. In einer sich an die Druckphase anschließenden Entlastungsphase wird jedoch, durch Umkehrung der Drehrichtung der Nockenscheibe 9, wie im Einzelnen aus Figur 4 ersichtlich, der Steuerkolben 13, welcher auf seinem Umfang eine umlaufende Nut 14 aufweist, in eine Position geschoben, in welcher die Rückflussleitung 22 zwischen der wenigstens einen Schmierstelle und dem Schmierstoffvorrat 1 freigegeben wird, so dass unter Druck stehende, nicht verwendeter Schmierstoff zurück in den Schmierstoffvorrat 1 geführt wird. Die Kipphebelanordnung ist dabei in Anpassung an die Nockenfläche 12 der Nockenscheibe 9, wie aus Figur 4 ersichtlich, so getroffen, dass in der Druckphase, also bei Drehung der Nockenscheibe 9, in Vorwärtsrichtung keine Kraftübertragung auf den Kipphebelmechanismus 10 erfolgt. Dies ist erst dann der Fall, wenn die Nockenscheibe 9 in der Entlastungsphase in umgekehrter Richtung von dem Antriebsorgan 6 gedreht wird.

Aus Figur 3 ist ersichtlich, dass der Antriebsmotor 16 und das Getriebe 23 zur Schaffung einer Baueinheit am Boden 18 des Pumpgehäuses 15 befestigt sein können. Aus Figur 3 ist ferner zu erkennen, dass an dem Boden 18 des Pumpengehäuses 15 auch der Druckschalter 20 vorgesehen ist und die einzelnen Pumpenelemente 3 über am Boden 18 vorgesehene Schmierstoffkanäle 19 miteinander in Verbindung stehen.

### Bezugszeichenliste:

- 1: Schmierstoffvorrat
- 2: Schmierstoffpumpe
- 3: Pumpenelemente
- 4: Schmierstoffleitung
- 5: Einleitungsverteiler
- 6: Antriebsorgan, wie Antriebswelle
- 7: Exzenter
- 8: Druckentlastungseinheit
- 9: Betätigungselement, wie Nockenscheibe
- 10: Kipphebelmechanismus
- 11: Übertragungselement, wie Rad
- 12: Nockenfläche
- 13: Steuerkolben
- 14: Nut
- 15: Pumpengehäuse
- 16: Antriebsmotor
- 17: Steuerung
- 18: Boden
- 19: Schmierstoffkanäle
- 20: Druckschalter
- 21: Versorgungsleitungen
- 22: Rückflussleitung
- 23: Getriebe

## Patentansprüche

1. Einleitungsschmiereinrichtung mit einem Schmierstoffvorrat (1) und einer von einem Antriebsmotor (16) antreibbaren Schmierstoffpumpe (2) mit wenigstens einem Pumpenelement (3) zur Förderung von Schmierstoff über eine Schmierstoffleitung (4) zu wenigstens einer Schmierstelle, insbesondere wenigstens einem Einleitungsverteiler (5), sowie mit einem Antriebsorgan (6), wie einer Antriebswelle, und mit einen Exzenter (7) aufweisenden Mitteln zum Erzeugen wenigstens eines Pumpenhubes des wenigstens einen Pumpenelements (3), wobei eine Druckentlastungseinheit (8), welche ebenfalls über das Antriebsorgan (6) betätigbar ist und in einer Druckphase eine Rückflussleitung (22) zwischen der Schmierstoffleitung (4) und dem Schmierstoffvorrat (1) sperrt und in einer anschließenden Entlastungsphase frei gibt, **dadurch gekennzeichnet, dass** die Druckentlastungseinheit (8) einen von einem Betätigungselement (9) betätigbaren Kippmechanismus (10) aufweist.

2. Einleitungsschmiereinrichtung nach Anspruch 1, **dadurch gekennzeichnet, dass** die Druckentlastungseinheit (8) von einem auf dem Antriebsorgan (6) sitzenden Betätigungselement (9), wie einer Nockenscheibe betätigbar ist.

3. Einleitungsschmiereinrichtung nach Anspruch 1 oder 2, **dadurch gekennzeichnet, dass** die Druckentlastungseinheit (8) über ein Übertragungselement (11), wie ein Rad an einer Nockenfläche (12) des Betätigungselements (9) anliegt.

4. Einleitungsschmiereinrichtung nach einem der vorhergehenden Ansprüche, **dadurch gekennzeichnet, dass** die Druckentlastungseinheit (8) einen axial verschieblichen Steuerkolben (13) aufweist, welcher in der Druckphase die Rückflussleitung (22) zwischen der Schmierstoffleitung (4) und dem Schmierstoffvorrat (1) sperrt und in der anschließenden Entlastungsphase, z.B. aufgrund einer auf der Umfangsfläche des Steuerkolbens (13) umlaufenden Nut (14), frei gibt.

5. Einleitungsschmiereinrichtung nach einem der vorhergehenden Ansprüche, **dadurch gekennzeichnet, dass** die Entlastungsphase durch Umkehr der Bewegungsrichtung des Antriebsorgans (6) mit dem Betätigungselement (9) eingeleitet wird.

6. Einleitungsschmiereinrichtung nach einem der vorhergehenden Ansprüche, **dadurch gekennzeichnet, dass** wenigstens ein Pumpenelement (3) und die Druckentlastungseinheit (8) in einem gemeinsamen Pumpengehäuse (15) untergebracht sind.

7. Einleitungsschmiereinrichtung nach Anspruch 6, **dadurch gekennzeichnet, dass** der Antriebsmotor (16), ggf. mit dem zugehörigen Getriebe (23) an dem Pumpengehäuse (15), vorzugsweise dessen Boden (18), befestigt ist.

8. Einleitungsschmiereinrichtung nach einem der vorhergehenden Ansprüche bzw. nach dem Oberbegriff des Anspruchs 1, mit mehreren Pumpenelementen (3), **dadurch gekennzeichnet, dass** die Pumpenelemente (3) miteinander, ggf über, an oder in dem Boden (18) des Pumpengehäuses (15) vorgesehene Schmierstoffkanäle (19), in Strömungsverbindung stehen.

## Claims

1. Single-line lubrication device comprising a lubricant reservoir (1) and a lubricant pump (2), which may be driven by a drive motor (16), with at least one pump element (3) for conveying lubricant via a lubricant line (4) to at least one lubrication point, in particular at least one single-line distributor (5) and comprising a drive member (6) such as a drive shaft, and comprising means having an eccentric (7) for generating at least one pump stroke of the at least one pump element (3), a pressure relief unit (8) which may also be actuated via the drive member (6) blocking a return line (22) between the lubricant line (4) and the lubricant reservoir (1) in a pressure phase and unblocking said return line in a subsequent relief phase, **characterised in that** the pressure relief unit (8) has a rocker mechanism (10) which may be actuated by an actuating element (9).

2. Single-line lubrication device according to Claim 1, **characterised in that** the pressure relief unit (8) may be actuated by an actuating element (9), such as a cam disc, located on the drive member (6).

3. Single-line lubrication device according to Claim 1 or 2, **characterised in that** the pressure relief unit (8) bears against a cam surface (12) of the actuating element (9) via a transmission element (11) such as a wheel.

4. Single-line lubrication device according to one of the preceding claims, **characterised in that** the pressure relief unit (8) has an axially displaceable control piston (13) which blocks the return line (22) between the lubricant line (4) and the lubricant reservoir (1) in the pressure phase and unblocks said return line in the subsequent relief phase, for example as a result of a peripheral groove (14) on the peripheral surface of the control piston (13).

5. Single-line lubrication device according to one of the preceding claims, **characterised in that** the relief phase is initiated by reversing the direction of movement of the drive member (6) with the actuating element (9).

6. Single-line lubrication device according to one of the preceding claims, **characterised in that** at least one pump element (3) and the pressure relief unit (8) are accommodated in a common pump housing (15).

7. Single-line lubrication device according to Claim 6, **characterised in that** the drive motor (16), optionally comprising the associated gear mechanism (23), is fastened to the pump housing (15), preferably the base (18) thereof.

8. Single-line lubrication device according to one of the preceding claims and/or according to the preamble of Claim 1, comprising a plurality of pump elements (3), **characterised in that** the pump elements (3) are fluidically connected to one another, optionally via lubricant channels (19) provided on or in the base (18) of the pump housing (15).

## Revendications

1. Dispositif de graissage d'introduction comprenant un réservoir de lubrifiant (1) et une pompe de lubrifiant (2) pouvant être entraînée par un moteur d'entraînement (16) avec au moins un élément de pompe (3) pour le transport de lubrifiant au moyen d'une conduite de lubrifiant (4) vers au moins un point de lubrification, en particulier au moins un répartiteur d'introduction (5), et un organe d'entraînement (6), tel qu'un arbre d'entraînement, et des moyens présentant un excentrique (7) pour générer au moins une élévation du au moins un élément de pompe (3), une unité de décharge de pression (8), qui peut être actionnée également par l'organe d'entraînement (6) et bloque dans une phase de pression une conduite retour (22) entre la conduite de lubrifiant (4) et le réservoir de lubrifiant (1) et la libère dans une phase de décharge consécutive, **caractérisé en ce que** l'unité de décharge de pression (8) présente un mécanisme de basculement (10) pouvant être actionné par un élément d'actionnement (9).

2. Dispositif de lubrification d'introduction selon la revendication 1, **caractérisé en ce que** l'unité de décharge de pression (8) peut être actionnée par un élément d'actionnement (9) logé sur l'organe d'entraînement (6), comme un disque à cames.

3. Dispositif de lubrification selon la revendication 1 ou 2, **caractérisé en ce que** l'unité de décharge de pression (8) s'applique au moyen d'un élément de transmission (11), comme une roue, sur une surface de came (12) de l'élément d'actionnement (9).

4. Dispositif de lubrification d'introduction selon l'une quelconque des revendications précédentes, **caractérisé en ce que** l'unité de décharge de pression (8) présente un piston de commande (13) coulissant axialement, qui, dans la phase de pression, bloque la conduite retour (22) entre la conduite de lubrifiant (4) et le réservoir de lubrifiant (1), et dans la phase de décharge consécutive, la libère par exemple du fait de la présence d'une rainure (14) circulant sur la surface périphérique du piston de commande (13).

5. Dispositif de lubrification d'introduction selon l'une quelconque des revendications précédentes, **caractérisé en ce que** la phase de décharge est amorcée par l'inversion du sens de déplacement de l'organe d'entraînement (6) avec l'élément d'actionnement (9).

6. Dispositif de lubrification d'introduction selon l'une quelconque des revendications précédentes, **caractérisé en ce qu'**au moins un élément de pompe (3) et l'unité de décharge de pression (8) sont logés dans un carter de pompe (15) commun.

7. Dispositif de lubrification d'introduction selon la revendication 6, **caractérisé en ce que** le moteur d'entraînement (16) est fixé, éventuellement avec la transmission (23) correspondante, sur le carter de pompe (15), de préférence son fond (18).

8. Dispositif de lubrification d'introduction selon l'une quelconque des revendications précédentes ou selon le préambule de la revendication 1, comprenant plusieurs éléments de pompe (3), **caractérisé en ce que** les éléments de pompe (3) sont en liaison d'écoulement les uns avec les autres, par exemple au moyen de canaux à lubrifiant (19) prévus sur ou dans le fond (18) du carter de pompe (15).
